# FASCICULE DE BREVET EUROPEEN

(11) **EP 2 904 034 B1**
(45) Date de publication et mention de la délivrance du brevet: **18.04.2018**
(21) Numéro de dépôt: 13776751.3
(22) Date de dépôt: 01.10.2013
(51) Int. Cl.: C08G 77/60

(54) **PROCEDE DE PREPARATION D'UN COPOLYMERE STATISTIQUE A BASE DE MONOMERES DIENIQUES ET DE MONOMERES CARBOSILANES CYCLIQUES**
VERFAHREN ZUR HERSTELLUNG EINES STATISTISCHEN COPOLYMERS AUF BASIS VON DIENMONOMEREN UND CYCLISCHEN CARBOSILAN-MONOMEREN
METHOD FOR PREPARING A STATISTICAL COPOLYMER BASED ON DIENE MONOMERS AND CYCLIC CARBOSILANE MONOMERS

(30) Priorité: 02.10.2012 FR 1259301
(43) Date de publication de la demande: 12.08.2015
(73) Titulaire: Compagnie Générale des Etablissements Michelin, 63000 Clermont-Ferrand (FR)
(72) Inventeur: MATMOUR, Rachid, F-63040 Clermont-Ferrand Cedex 9 (FR); SEEBOTH, Nicolas, F-63040 Clermont-Ferrand Cedex 9 (FR); CHATARD, Julien, F-63040 Clermont-Ferrand Cedex 9 (FR)
(74) Mandataire: Le Cam, Véronique Marie Christine
(86) Numéro de dépôt international: PCT/EP2013/070480
(87) Numéro de publication internationale: WO 2014/053509

(56) Documents cités:
- US-A- 5 260 377
- DATABASE WPI Week 197328 Thomson Scientific, London, GB; AN 1973-39167U XP002692055, -& SU 304 834 A1 (AV TOPCHIEV PETROCHEMICAL) 25 décembre 1972 (1972-12-25) cité dans la demande
- ANONYMOUS: "POLYCARBOSILANES", 15 juillet 2002 (2002-07-15), ENCYCLOPEDIA OF POLYMER SCIENCE AND TECHNOLOGY, WILEY, GB, PAGE(S) 426 - 439, XP007920491, pages 427,429
- SH FINKELSHTEIN E ET AL: "Polycarbosilanes Based on Silicon-Carbon Cyclic Monomers", ADVANCES IN POLYMER SCIENCE = FORTSCHRITTE DER HOCHPOLYMEREN-FORSCHUNG, SPRINGER, GERMANY, vol. 235, 1 octobre 2010 (2010-10-01), pages 111-159, XP008160123, ISSN: 0065-3195, DOI: 10.1007/12_2009_39 [extrait le 2010-02-25]

## Description

La présente invention concerne les copolymères statistiques diéniques comprenant des atomes de silicium au sein de la chaîne polymérique principale. Plus particulièrement, la présente invention concerne l'obtention de ces copolymères.

Le brevet US 5,357,019 décrit la synthèse de polycarbosilanes réticulables par réaction du butadiène avec un dérivé dichlorosilane en présence de magnésium et d'iode dans le THF. Le copolymère résultant alterne les unités insaturées issues du monomère diénique et les unités hydrures de silicium. En outre, les temps de polymérisation compris entre 12h et 24h sont longs pour l'obtention de polycarbosilane insaturé possédant des masses moléculaires faibles comprises entre 1000 et 20 000 g/mol et des polydispersités élevées.

Le brevet US 5,171,810 ainsi que les publications des mêmes auteurs (Weber et al., Macromolecules 1988, 21, 1563-1566 ; Macromolecules 1990, 23, 1583-1586; Macromolecules 1990, 23, 1915-1917) portent quant à eux sur la polymérisation de carbosilanes cycliques insaturés par polymérisation anionique par ouverture de cycle menant à des polycarbosilanes réticulables, consistant en une alternance parfaite d'insaturation et de groupement dialkylsilane. Les homopolymères et copolymères résultants sont uniquement issus de monomères dérivés du silacyclopentène, les masses moléculaires en poids ne dépassant pas 60 000 g/mol avec des polydispersités allant jusqu'à 2,6. En outre, ce procédé nécessite une étape supplémentaire de préparation des monomères cycliques silacyclopentène consistant à faire réagir du butadiène ou de l'isoprène avec un dérivé dicholorosilane en présence d'un métal tel que le magnésium ou le sodium dans un solvant polaire tel que le THF, le diéthyléther ou l'hexaméthylphosphoramide (J. Org. Chem. 1968, 33, 1975; J. Organometal. Chem. 1971, 30, 5 ; J. Organometal. Chem. 1970, 25, 51). Les rendements de synthèse faibles sont compris entre 20 et 40%.

L'introduction d'insaturations dans des polymères de type polycarbosilane a également été réalisée lors des travaux sur la polymerisation par métathèse de diènes acyclique (ADMET) (Wagener et al., Macromolecules 1991, 24, 6073-6078). Toutefois, les catalyseurs utilisés nécessitent des synthèses préalables et sont extrêmement sensibles à l'air et aux impuretés. Leurs manques de stabilité thermique limitent en outre le degré de polymérisation pour certains monomères. Les différents monomères nécessitent quant à eux une synthèse par voie Grignard, hydrosilylation ou condensation d'un silanol et d'un chlorosilane.

D'un autre côté, les groupes de M. Gauthier et J. Roovers ont décrit la préparation de matériaux hybrides à base d'une écorce de polybutadiène et d'un coeur de dendrimère de carbosilane par voie convergente (Macromolecules, 2010, 43, 3672 ; Macromolecules 1993, 26, 4234). Ce procédé de préparation consiste à synthétiser dans un premier temps un dendrimère de carbosilane portant en périphérie 32, 64 ou 128 fonctions réactives chlorosilane. Dans un second temps, des chaînes vivantes anioniques de polybutadiènyllithium sont couplées sur ces fonctions chlorosilane pour générer un matériau hybride à base d'un coeur carbosilane inorganique et d'une écorce organique de polybutadiène.

Le groupe de M. Möller a quant à lui présenté la synthèse de matériaux hybrides à base d'une écorce de polybutadiène et d'un coeur de dendrimère de carbosilane par voie divergente (Macromol. Chem. Phys., 1998, 199, 889). La méthode de préparation consiste dans un premier temps à synthétiser par succession d'étapes d'hydrosilylation et de réaction avec un organomagnésien un dendrimère de polycarbosilane porteur en périphérie d'insaturation. Dans une seconde étape, l'écorce de polymères diéniques est préparée par croissance de chaîne vivante anionique à partir des espèces lithiées générées par réaction de butyllithium sur les insaturations en périphérie. Ces stratégies de synthèse ont permis la préparation d'étoiles de polybutadiène, par exemple, possédant 8 ou 16 branches.

Le brevet SU 304 834 décrit des préparations de copolymères de butadiène et de silacyclobutane substitué dans de l'hexane à titre de seul solvant. Ce brevet décrit notamment l'obtention d'un copolymère à partir d'un monomère carbosilane particulier : le 1-(p-dimethylaminophenyl)-1-methyl-1-silacyclobutane.

Le problème technique qui se pose par rapport à l'état de la technique est de pourvoir mettre en oeuvre la synthèse d'un copolymère diénique présentant au sein de la chaîne principale des atomes de silicium répartis de manière statistique. Plus particulièrement, il convient de pouvoir mettre en oeuvre une telle synthèse selon un procédé simple, reproductible, susceptible d'être utilisé à l'échelle industrielle, ne présentant pas les inconvénients des procédés de l'art antérieur. Notamment, il convient de proposer un procédé ne nécessitant pas la synthèse des monomères et des catalyseurs, n'employant pas des temps de polymérisation longs et permettant l'obtention de masses moléculaires élevées et de polydispersités faibles.

La présente invention répond à ce problème technique en ce que les inventeurs ont mis au point un nouveau procédé de copolymérisation par addition simultanée de monomères diéniques et de monomères carbosilanes cycliques spécifiques permettant l'obtention de copolymère statistique comprenant des unités insaturées et des unités dialkylcarbosilanes dans la chaîne principale du polymère avec la possibilité d'atteindre des masses moléculaires élevées. Le procédé selon l'invention est simple, reproductible et susceptible d'être utilisé à l'échelle industrielle. Il permet de synthétiser des copolymères présentant des masses molaires élevées de manière contrôlée.

Un premier objet de l'invention est donc ce procédé de copolymérisation.

Un autre objet de l'invention est le copolymère statistique comprenant des unités insaturées et des unités dialkylcarbosilanes dans la chaîne principale susceptible d'être obtenu par ce procédé de copolymérisation.

Dans la présente description, sauf indication expresse différente, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Dans la suite de la présente description, on entend par "unité insaturée" une unité issue d'un monomère diène et comportant une double liaison. Par ailleurs, on appelle classiquement "distribution statistique", une distribution des unités constitutives du copolymère qui obéit à une loi statistique.

Ainsi, un premier objet de l'invention est un procédé de synthèse d'un copolymère diénique statistique consistant à copolymériser au moins un monomère diène et un monomère carbosilane cyclique de formule I, en présence d'un amorceur anionique dans un milieu réactionnel comprenant un solvant polaire, 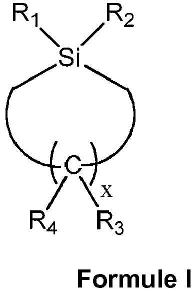
avec R1 et R2, identiques ou différents, étant chacun un groupement alkyle en C1-C5, aryle en C6-C14, alkyle aromatique C7-C11;
R3 et R4, identiques ou différents, étant chacun un atome d'hydrogène ou un groupement alkyle en C1-C5, aryle en C6-C14, alkyle aromatique C7-C11; et
x est un nombre entier d'une valeur allant de 2 à 5, et préférentiellement 3.

Dans la formule I, lorsque R désigne un radical alkyle, celui-ci comporte 1 à 5 atomes de carbone, de préférence 1 à 4, plus préférentiellement 1 à 3 atomes de carbone. On peut citer à titre d'exemple les radicaux méthyle, éthyle et propyle.

Dans la formule I, lorsque R désigne un radical aryle, celui-ci comporte 6 à 14 atomes de carbone. On peut citer à titre d'exemple les radicaux phényle, naphtyle et anthracényle.

Dans la formule I, lorsque R désigne un radical alkyl aromatique, celui-ci comporte 7 à 11 atomes de carbone. On peut citer à titre d'exemple les radicaux benzyle, tolyle, xylyle.

A titre de carbosilane cyclique de formule I utilisé comme monomère selon le procédé conforme à l'invention, on peut citer silacyclobutane, 1,1-dimethyl silacyclobutane, 1,1-diethyl silacyclobutane, 1,1-dipropyl silacyclobutane, 1, 1-dibutyl silacyclobutane, 1-methyl-1-phenyl silacyclobutane, 1, 1-diphenyl silacyclobutane, 1,1,2-triphenyl silacyclobutane, 1-methyl-1-tolyl silacyclobutane, 1-methyl-1-xylyl silacyclobutane, 1-ethyl-1-phenyl silacyclobutane, 1-ethyl-1-tolyl silacyclobutane, 1-ethyl-1-xylyl silacyclobutane, 1-methyl-1-naphthyl silacyclobutane, silacyclopropane, 1,1-dimethyl silacyclopropane, 1, 1-diethyl silacyclopropane, 1,1-dipropyl silacyclopropane, 1, 1-dibutyl silacyclopropane, 1-methyl-1-phenyl silacyclopropane, 1, 1-diphenyl silacyclopropane, 1,1,2-triphenyl silacyclopropane, 1-methyl-1-tolyl silacyclopropane, 1-methyl-1-xylyl silacyclopropane, 1-ethyl-1-phenyl silacyclopropane, 1-ethyl-1-tolyl silacyclopropane, 1-ethyl-1-xylyl silacyclopropane, 1-methyl-1-naphthyl silacyclopropane, silacycloéthane, 1,1-dimethyl silacycloéthane, 1,1-diethyl silacycloéthane, 1,1-dipropyl silacycloéthane, 1,1-dibutyl silacycloéthane, 1-methyl-1-phenyl silacycloéthane, 1,1-diphenyl silacycloéthane, 1,1,2-triphenyl silacycloéthane, 1-methyl-1-tolyl silacycloéthane, 1-methyl-1-xylyl silacycloéthane, 1-ethyl-1-phenyl silacycloéthane, 1-ethyl-1-tolyl silacycloéthane, 1-ethyl-1-xylyl silacycloéthane, ainsi que leurs mélanges. Le monomère carbosilane cyclique est de préférence un silacyclobutane, plus particulièrement le 1,1-dimethyl silacyclobutane.

A titre de monomère diénique, on peut utiliser selon le procédé conforme à l'invention tout monomère diène conjugué ayant 4 à 12 atomes de carbone. Conviennent notamment le butadiène-1,3, le 2-méthyl-1,3-butadiène, les 2,3 di(alcoyle en C1 à C5)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène, le 2,4 hexadiène, etc, ainsi que leurs mélanges. Le monomère diénique est de préférence le butadiène-1,3.

Selon une variante du procédé selon l'invention, on copolymérise avec le monomère diène et le monomère carbosilane cyclique, au moins un autre monomère. Cet autre monomère peut être un composé vinylaromatique ayant de 8 à 20 atomes de carbone. A titre de composé vinylaromatique convient notamment le styrène, l'ortho-, méta, para-méthylstyrène, le mélange commercial "vinyltoluène", le para-tertiobutylstyrène, les méthoxystyrènes, le vinylmésitylène, le divinylbenzène, le vinylnaphtalène, etc. Cet autre monomère est de préférence le styrène.

A titre d'amorceur anionique utilisable dans le procédé conforme à l'invention, on peut utiliser tout initiateur mono ou polyfonctionnel connu. Toutefois, un initiateur contenant un métal alcalin est utilisé à titre préférentiel. Comme métal alcalin, le lithium est préféré. Comme initiateurs organolithiens conviennent notamment ceux comportant une ou plusieurs liaisons carbone-lithium. Des composés représentatifs sont les organolithiens aliphatiques tels que l'éthyllithium, le n-butyllithium (n-BuLi), l'isobutyllithium, les polyméthylènes dilithium tels que le 1,4-dilithiobutane, etc. Les amidures de lithium sont également des initiateurs utilisables dans le cadre de l'invention. On peut citer les amidures de lithium obtenus à partir d'une amine secondaire cyclique, telle que la pyrrolidine et l'hexaméthylèneimine, et solubles dans un solvant hydrocarboné avec ou sans utilisation d'un agent de solvatation.

Selon le procédé de l'invention, le milieu réactionnel comprend un solvant inerte polaire. On entend par solvant inerte dans le cadre de l'invention un solvant non polymérisable avec les monomères en présence. Le solvant inerte polaire peut constituer la totalité dudit solvant de polymérisation. Selon l'invention, le taux minimal de solvant polaire est d'au moins 10% en volume par rapport au volume total de solvant de polymérisation.

A titre de solvant polaire inerte, on peut utiliser par exemple tout solvant polaire aprotique. On peut citer à ce titre tout composé azoté de type amine tertiaire tel que notamment la triéthyl amine ou la tétraméthyléthylènediamine (TMEDA), ou tout hétérocycle azoté ne possédant pas d'hydrogène acide lié à l'azote tel que notamment la pyridine. On peut également citer tout éther tel que notamment le tétrahydrofurane (THF), le diéthyléther ou le diméthyléther, etc. Conviennent également dans le cadre de l'invention les mélanges de ces solvants.

Selon une variante du procédé de l'invention, le solvant polaire constitue la totalité du solvant de polymérisation présent dans le milieu réactionnel.

Selon une autre variante du procédé de l'invention, le solvant de polymérisation comprend également un solvant apolaire inerte. Selon une mise en oeuvre particulière de cette variante le taux de solvant apolaire est supérieur à 0 et au plus de 90% en volume par rapport au volume total de solvant de polymérisation.

A titre de solvant apolaire, on peut utiliser selon le procédé conforme à l'invention tout solvant hydrocarboné inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène, ainsi que leurs mélanges.

Selon différentes variantes du procédé conforme à l'invention, d'autres composés peuvent être ajoutés au milieu réactionnel. On peut citer à titre d'exemple la tétra-méthyl-éthylènediamine (ou TMEDA) habituellement utilisé pour augmenter la réactivité des composés organolithiens.

La polymérisation peut être effectuée en continu ou en discontinu. On effectue la polymérisation à une température d'au moins -100 °C, de préférence d'au moins - 90°C, voire - 80°C, et d'au plus 90 °C, voire d'au plus 60°C et de préférence d'au plus 30 °C.

Le procédé de copolymérisation conforme à l'invention permet l'obtention d'un copolymère comprenant des unités insaturées et des unités dialkylcarbosilane, issues respectivement de monomères diéniques et de monomères carbosilanes cycliques, réparties de manière statistique au sein de la chaîne. Ce copolymère diénique statistique fait également l'objet de la présente invention.

Ce procédé permet un bon contrôle des masses molaires moyennes des copolymères préparés. Ces derniers présentent un indice de polydispersité relativement étroit, généralement inférieur à 2. On entend par indice de polydispersité le rapport masse molaire en masse / masse molaire en nombre (Mw/Mn). Les masses molaires moyennes dépendent des conditions de polymérisations et notamment de la nature du solvant conformément à ce qui est expliqué plus haut.

Le copolymère selon l'invention présente une Tg (température de transition vitreuse) comprise entre 0°C et - 90°C et plus particulièrement entre - 30°C et - 80°C.

Le copolymère peut présenter une deuxième Tg supérieure à la précédente lorsqu'un monomère de type vinyle aromatique est copolymérisé avec le monomère diène et le monomère carbosilane cyclique. Ceci s'explique par l'enrichissement d'une partie du copolymère en unités issues de ce monomère vinyle aromatique du fait d'une réactivité différente. Le copolymère n'en reste pas moins un copolymère statistique selon l'invention dans la mesure où des unités constitutives du copolymère issu des différents monomères se répartissent dans les deux parties du copolymère selon une loi statistique.

Par ailleurs, on constate de manière inattendue que, lorsque du butadiène est copolymérisé avec un monomère carbosilane cyclique selon le procédé de l'invention, son insertion dans la chaîne polymère se fait majoritairement selon un schéma d'enchaînement de type 1,4-, au détriment de l'enchaînement de type 1,2-(vinylique), alors que la polymérisation s'effectue en solvant polaire. Or, il est connu que l'adjonction au milieu de polymérisation d'un agent polaire a pour effet d'élever le taux moyen des enchaînements de type 1,2-. En d'autres termes, dans la partie polybutadiénique d'un copolymère de carbosilane conforme à l'invention, la teneur (% molaire) en unités 1,4-butadiényle est supérieure à la teneur (% molaire) en unités 1,2-butadiényle.

Le copolymère de l'invention, comprenant des unités insaturées et des unités dialkylcarbosilane issues respectivement de monomères diéniques et de monomères carbosilanes cycliques et réparties de manière statistique au sein de la chaîne polymère, peut être utilisé dans des applications similaires des polymères diéniques modifiés,
Par exemple, il est connu pour l'optimisation des interactions entre la gomme et la charge renforçante au sein d'une composition de caoutchouc renforcée, de modifier la nature des polymères diéniques. Cette modification peut être réalisée soit après polymérisation, notamment par l'intermédiaire d'agents permettant de fonctionnaliser ces polymères le long de leur chaîne ou en extrémité de chaîne, soit par copolymérisation avec un monomère introduisant des unités autres que celles issues des monomères diéniques.

Ainsi, la structure particulière du copolymère selon l'invention permet d'envisager son utilisation dans la fabrication de divers produits à base de caoutchouc renforcé.

En outre, le caractère statistique du copolymère permet de régler le taux d'unités carbosilanes désiré et donc le taux de fonction interagissant avec une charge. Cette propriété permet d'envisager une utilisation optimisée du copolymère diénique statistique selon l'invention dans la fabrication de ces produits à base de caoutchouc renforcé.

Les caractéristiques précitées de la présente invention, ainsi que d'autres, seront mieux comprises à la lecture de la description suivante de plusieurs exemples de réalisation de l'invention, donnés à titre illustratif et non limitatif.

### EXEMPLE DE REALISATION DE L'INVENTION.

### Mesures utilisés

Les élastomères sont caractérisés, avant cuisson, comme indiqué ci-après.

### Chromatographie d'exclusion stérique

On utilise la chromatographie d'exclusion stérique ou SEC (Size Exclusion Chromatography). La SEC permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

Préparation du polymère: Il n'y a pas de traitement particulier de l'échantillon de polymère avant analyse. Celui-ci est simplement solubilisé, dans du (tétrahydrofuranne + 1%vol. de diisopropylamine + 1%vol. de triéthylamine + 1%vol. d'eau distillée) ou dans du chloroforme, à une concentration d'environ 1 g/l. Puis la solution est filtrée sur filtre de porosité 0,45µm avant injection.

Analyse SEC: L'appareillage utilisé est un chromatographe « WATERS alliance ». Le solvant d'élution est du tétrahydrofuranne + 1%vol. de diisopropylamine + 1%vol. de triéthylamine ou du chloroforme selon le solvant utilisé pour la mise en solution du polymère. Le débit est de 0,7 ml/min, la température du système de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ».

Le volume injecté de la solution de l'échantillon de polymère est 100 µl. Le détecteur est un réfractomètre différentiel «WATERS 2410» et le logiciel d'exploitation des données chromatographiques est le système « WATERS EMPOWER».

Les masses molaires moyennes calculées sont relatives à une courbe d'étalonnage réalisée à partir de polystyrènes étalons commerciaux « PSS READY CAL-KIT ».

### Température de transition vitreuse

Les températures de transition vitreuse Tg des polymères sont mesurées au moyen d'un calorimètre différentiel (" differential scanning calorimeter "). L'analyse est réalisée selon les requis de la norme ASTM D3418-08.

### Spectroscopie de résonance magnétique nucléaire

Les déterminations des taux des différentes unités monomères et de leurs microstructures au sein du copolymère sont réalisées par une analyse RMN. Les spectres sont acquis sur un spectromètre 500 MHz BRUKER équipé d'une sonde " large bande " BBlz-grad 5 mm. L'expérience RMN 1H quantitative, utilise une séquence simple impulsion 30° et un délai de répétition de 3 secondes entre chaque acquisition. Les échantillons sont solubilisés dans le sulfure de carbone (CS2). 100 µL de cyclohexane deutéré (C6D12) sont ajoutés pour le signal de lock.

Le spectre RMN 1 H permet de quantifier les motifs carbosilane par intégration des signaux caractéristiques des protons CH3Si et CH2Si qui apparaissent à des déplacements chimiques de δ=-0,1ppm et compris entre δ=0,4 et 0,5ppm, respectivement.

Le spectre RMN 2D HMQC 1H-29Si permet de déterminer la nature de la répartition des unités issues de monomères carbosilanes par rapport aux unités diéniques ou vinyle aromatiques grâce aux valeurs de déplacements chimiques des noyaux Silicium et des protons au voisinage 2J (via 2 liaisons).

### Exemples de réalisation de l'invention

### Exemple 1 : Copolymère statistique de 1,1 Diméthylsilétane et 1,3-butadiène

Dans un réacteur de 250 millilitres, maintenu sous une pression d'azote de 2 bars, contenant 24 millilitres de tetrahydrofurane et 24 millilitres de méthylcyclohexane, sont injectés 1 g de 1,1-diméthylsilétane (1,1-diméthyl silacyclobutane) et 1 g de butadiène ainsi que 0,01 millilitres (3 équivalents par rapport au lithium actif) de tetraméthyléthylènediamine (TMEDA). Après neutralisation des impuretés dans la solution à polymériser par addition de n-butyllithium, sont ajoutés 0,32 millilitres de n-butyllithium à 0,266 mol/L. Le milieu réactionnel prend alors une coloration jaune-orangé. La polymérisation est conduite à -40 °C.

Après 23 min, le taux de conversion des monomères atteint 56%. Ce taux est déterminé par pesée d'un extrait séché à 110 °C, sous la pression réduite de 200 mmHg.

La polymérisation est stoppée par ajout d'un excès de méthanol par rapport au lithium: une décoloration totale du milieu réactionnel est observée. La solution de polymère est soumis à un traitement antioxydant par addition de 0,2 parties pour cent parties d'élastomères (pce) de 4,4'-méthylène-bis-2,6-tert-butylphénol et de 0,2 parties pour cent parties d'élastomères (pce) de N-(1,3-diméthylbutyl)-N'-phényl-p-phénylènediamine, puis le polymère est séché par étuvage sous vide à 60°C pendant 1 jour.

La masse moléculaire relative Mn de ce copolymère, déterminée par la technique SEC, est de 35 700g/mol et l'Ip est de 1,51.

La microstructure de ce copolymère est déterminée par spectroscopie RMN. La répartition en motifs dialkylcarbosilane et butadiène 1,4- (cis+trans) est statistique pour 99% molaire du copolymère. Les motifs butadiène 1,2- représentent 1% molaire du copolymère. Le taux molaire de motifs dialkylcarbosilane est de 72%, celui de motifs butadiène 1,4- est de 27% et celui de motifs butadiène 1,2- est de 1%.

La température de transition vitreuse Tg de ce copolymère, mesurée par la technique DSC, est de -72°C.

### Exemple 2 : Copolymère de 1,1 Diméthylsilétane et 1,3-butadiène

Dans un réacteur de 250 millilitres, maintenu sous une pression d'azote de 2 bars, contenant 40 millilitres de tetrahydrofurane, sont injectés 5 g de 1,1-diméthylsilétane et 5 g de butadiène ainsi que 0,03 millilitres (3 équivalents par rapport au lithium actif) de tetraméthyléthylènediamine (TMEDA). Après neutralisation des impuretés dans la solution à polymériser par addition de n-butyllithium, sont ajoutés 2,56 millilitres de n-butyllithium à 0,390 mol/L. Le milieu réactionnel prend alors une coloration jaune-orangé. La polymérisation est conduite à -80 °C.

Après 150 min, le taux de conversion des monomères atteint 54%. Ce taux est déterminé par pesée d'un extrait séché à 110 °C, sous la pression réduite de 200 mmHg.

La polymérisation est stoppée par ajout d'un excès de méthanol par rapport au lithium: une décoloration totale du milieu réactionnel est observée. La solution de polymère est soumis à un traitement antioxydant par addition de 0,2 parties pour cent parties d'élastomères (pce) de 4,4'-méthylène-bis-2,6-tert-butylphénol et de 0,2 parties pour cent parties d'élastomères (pce) de N-(1,3-diméthylbutyl)-N'-phényl-p-phénylènediamine, puis le polymère est séché par étuvage sous vide à 60°C pendant 1 jour.

La masse moléculaire relative Mn relative de ce copolymère, déterminée par la technique SEC, est de 10 800g/mol et l'Ip est de 1,50.

La microstructure de ce copolymère est déterminée par spectroscopie RMN. Le taux molaire de motifs dialkylcarbosilane est de 71%, celui de motifs butadiène 1,4 est de 21 % et celui de motifs butadiène 1,2 est de 4%.

La température de transition vitreuse Tg de ce copolymère, mesurée par la technique DSC, est de -71 °C.

### Exemple 3 : Copolymère statistique de 1,1 Diméthylsilétane et 1,3-butadiène

Dans un réacteur de 250 millilitres, maintenu sous une pression d'azote de 2 bars, contenant 20 millilitres de tetrahydrofurane et 20 millilitres de méthylcyclohexane, sont injectés 5 g de 1,1-diméthylsilétane et 5 g de butadiène ainsi que 0,03 millilitres (3 équivalents par rapport au lithium actif) de tetraméthyléthylènediamine (TMEDA). Après neutralisation des impuretés dans la solution à polymériser par addition de n-butyllithium, sont ajoutés 0,87 millilitres de n-butyllithium à 0,267 mol/L. Le milieu réactionnel prend alors une coloration jaune-orangé. La polymérisation est conduite à -40 °C.

Après 22 min, le taux de conversion des monomères atteint 63%. Ce taux est déterminé par pesée d'un extrait séché à 110 °C, sous la pression réduite de 200 mmHg.

La polymérisation est stoppée par ajout d'un excès de méthanol par rapport au lithium: une décoloration totale du milieu réactionnel est observée. La solution de polymère est soumis à un traitement antioxydant par addition de 0,2 parties pour cent parties d'élastomères (pce) de 4,4'-méthylène-bis-2,6-tert-butylphénol et de 0,2 parties pour cent parties d'élastomères (pce) de N-(1,3-diméthylbutyl)-N'-phényl-p-phénylènediamine, puis le polymère est séché par étuvage sous vide à 60°C pendant 1 jour.

La masse moléculaire relative Mn de ce copolymère, déterminée par la technique SEC, est de 62 700g/mol, l'Ip est de 1,51.

La microstructure de ce copolymère est déterminée par spectroscopie RMN. La répartition en motifs dialkylcarbosilane et butadiène 1,4- (cis+trans) est statistique pour 99% molaire du copolymère. Les motifs butadiène 1,2 représentent 7% molaire du copolymère. Le taux molaire de motifs dialkylcarbosilane est de 63%, celui de motifs butadiène 1,4- est de 30% et celui de motifs butadiène 1,2- est de 7%.

La température de transition vitreuse Tg de ce copolymère, mesurée par la technique DSC, est de -71 °C.

### Exemple 4 : Terpolymère de 1,1-Diméthylsilétane, 1,3-butadiène et styrène

Dans un réacteur de 250 millilitres, maintenu sous une pression d'azote de 2 bars, contenant 24 millilitres de tetrahydrofurane et 24 millilitres de méthylcyclohexane, sont injectés 0,66 g de 1,1-diméthylsilétane, 0,66 g de butadiène et 0,66 g de styrène. Après neutralisation des impuretés dans la solution à polymériser par addition de n-butyllithium, sont ajoutés 0,39 millilitres de n-butyllithium à 0,266 mol/L. Le milieu réactionnel prend alors une coloration jaune-orangé. La polymérisation est conduite à -40 °C.

Après 2 heures et 30 min, le taux de conversion des monomères atteint 86%. Ce taux est déterminé par pesée d'un extrait séché à 110 °C, sous la pression réduite de 200 mmHg.

La polymérisation est stoppée par ajout d'un excès de méthanol par rapport au lithium: une décoloration totale du milieu réactionnel est observée. La solution de polymère est soumis à un traitement antioxydant par addition de 0,2 parties pour cent parties d'élastomères (pce) de 4,4'-méthylène-bis-2,6-tert-butylphénol et de 0,2 parties pour cent parties d'élastomères (pce) de N-(1,3-diméthylbutyl)-N'-phényl-p-phénylènediamine, puis le polymère est séché par étuvage sous vide à 60°C pendant 1 jour.

La masse moléculaire relative Mn relative de ce copolymère, déterminée par la technique SEC, est de 26 300g/mol et l'Ip est de 1,64.

La microstructure de ce copolymère est déterminée par spectroscopie RMN. Le taux molaire de motifs dialkylcarbosilane est de 25%, celui de motifs butadiène est de 11 % et celui de motifs styrène est de 64%.

Les températures de transition vitreuse Tg de ce copolymère, mesurée par la technique DSC, sont de -25°C et 31 °C.

## Revendications

1. Procédé de préparation d'un copolymère statistique à base de monomères diéniques et de monomères carbosilanes cycliques, **caractérisé en ce qu'**il comprend une étape de copolymérisation, en présence d'un amorceur anionique dans un solvant de polymérisation comprenant un solvant polaire inerte, d'au moins un monomère diénique et d'au moins un monomère carbosilane cyclique répondant à la Formule 1: 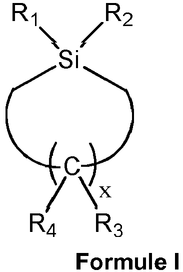 avec
R1 et R2, identiques ou différents, étant chacun un groupement alkyle en C₁-C₅, aryle en C₆-C₁₄, alkyle aromatique C₇-C₁₁;
R3 et R4, identiques ou différents, étant chacun un atome d'hydrogène ou un groupement alkyle en C₁-C₅, aryle en C₆-C₁₄, alkyle aromatique C₇-C₁₁; et
x est un nombre entier d'une valeur allant de 2 à 5, et préférentiellement 3;
la fraction volumique en solvant polaire inerte par rapport au volume total de solvant étant d'au moins 10%.

2. Procédé de préparation d'un copolymère statistique à base de monomères diéniques et de monomères carbosilanes cycliques selon la revendication 1, **caractérisé en ce que** le solvant de polymérisation comprend également un solvant apolaire inerte.

3. Procédé de préparation d'un copolymère statistique à base de monomères diéniques et de monomères carbosilanes cycliques selon la revendication 1 ou 2, **caractérisé en ce que** l'amorceur anionique contient un métal alcalin, tel qu'un composé organolithien aliphatique.

4. Procédé de préparation d'un copolymère statistique à base de monomères diéniques et de monomères carbosilanes cycliques selon l'une quelconque des revendications précédentes, **caractérisé en ce que** le monomère diénique est le butadiène-1,3.

5. Procédé de préparation d'un copolymère statistique à base de monomères diéniques et de monomères carbosilanes cycliques selon l'une quelconque des revendications précédentes, **caractérisé en ce qu'**au moins un autre monomère copolymérise lors de l'étape de copolymérisation.

6. Procédé de préparation d'un copolymère statistique à base de monomères diéniques et de monomères carbosilanes cycliques selon la revendication 5, **caractérisé en ce que** l'autre monomère est un composé vinyle aromatique, tel que le styrène.

7. Copolymère statistique comprenant, réparties de manière statistique au sein de la chaîne linéaire principale du copolymère, des unités insaturées issues d'au moins un monomère diène et des unités dialkylcarbosilanes issues d'au moins un monomère carbosilane cyclique de formule 1 : 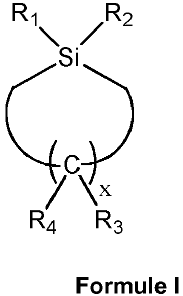 avec
R1 et R2, identiques ou différents, étant chacun un groupement alkyle en C₁-C₅, aryle en C₆-C₁₄, alkyle aromatique C₇-C₁₁;
R3 et R4, identiques ou différents, étant chacun un atome d'hydrogène ou un groupement alkyle en C₁-C₅, aryle en C₆-C₁₄, alkyle aromatique C₇-C₁₁; et
x est un nombre entier d'une valeur allant de 2 à 5, et préférentiellement 3,
le monomère diène étant insérées majoritairement selon un enchaînement de type 1,4.

8. Copolymère diénique statistique selon la revendication 7 **caractérisé en ce que** le monomère diène est le butadiène-1,3.

9. Copolymère diénique statistique selon la revendication 7 ou 8, **caractérisé en ce qu'**il comprend outre ces unités insaturées et ces unités dialkylcarbosilane, des unités issues d'au moins un autre monomère.

10. Copolymère diénique statistique selon la revendication 9, **caractérisé en ce que** cet autre monomère est le styrène.

## Patentansprüche

1. Verfahren zur Herstellung eines statistisch aufgebauten Copolymers auf Basis von Dienmonomeren und cyclischen Carbosilanmonomeren, **dadurch gekennzeichnet, dass** es einen Schritt der Copolymerisation von mindestens einem Dienmonomer und mindestens einem cyclischen Carbosilanmonomer der Formel I: 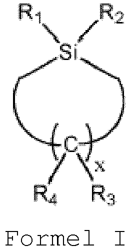 wobei
R1 und R2 gleich oder verschieden sind und jeweils für eine C₁-C₅-Alkyl-, C₆-C₁₄-Aryl- oder C₇-C₁₁-Alkylaromatengruppe stehen;
R3 und R4 gleich oder verschieden sind und jeweils für ein Wasserstoffatom oder eine C₁-C₅-Alkyl-, C₆-C₁₄-Aryl- oder C₇-C₁₁-Alkylaromatengruppe stehen; und
x für eine ganze Zahl mit einem Wert im Bereich von 2 bis 5 und vorzugsweise 3 steht;
in Gegenwart eines anionischen Initiators in einem Polymerisationslösungsmittel, das ein inertes polares Lösungsmittel umfasst, umfasst, wobei der Volumenanteil an inertem polarem Lösungsmittel, bezogen auf das Gesamtvolumen an Lösungsmittel, mindestens 10 % beträgt.

2. Verfahren zur Herstellung eines statistisch aufgebauten Copolymers auf Basis von Dienmonomeren und cyclischen Carbosilanmonomeren nach Anspruch 1, **dadurch gekennzeichnet, dass** das Polymerisationslösungsmittel außerdem ein inertes unpolares Lösungsmittel umfasst.

3. Verfahren zur Herstellung eines statistisch aufgebauten Copolymers auf Basis von Dienmonomeren und cyclischen Carbosilanmonomeren nach Anspruch 1 oder 2, **dadurch gekennzeichnet, dass** der anionische Initiator ein Alkalimetall umfasst, wie eine aliphatische Organolithiumverbindung.

4. Verfahren zur Herstellung eines statistisch aufgebauten Copolymers auf Basis von Dienmonomeren und cyclischen Carbosilanmonomeren nach einem der vorhergehenden Ansprüche, **dadurch gekennzeichnet, dass** es sich bei dem Dienmonomer um 1,3-Butadien handelt.

5. Verfahren zur Herstellung eines statistisch aufgebauten Copolymers auf Basis von Dienmonomeren und cyclischen Carbosilanmonomeren nach einem der vorhergehenden Ansprüche, **dadurch gekennzeichnet, dass** beim Copolymerisationsschritt mindestens ein weiteres Monomer copolymerisiert.

6. Verfahren zur Herstellung eines statistisch aufgebauten Copolymers auf Basis von Dienmonomeren und cyclischen Carbosilanmonomeren nach Anspruch 5, **dadurch gekennzeichnet, dass** es sich bei dem weiteren Monomer um eine vinylaromatische Verbindung, wie Styrol, handelt.

7. Statistisch aufgebautes Copolymer, umfassend statistisch in der linearen Hauptkette des Copolymers verteilt ungesättigte Einheiten, die sich aus mindestens einem Dienmonomer ergeben, und Dialkylcarbosilan-Einheiten, die sich aus mindestens einem cyclischen Carbosilanmonomer der Formel I: 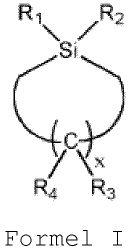 wobei
R1 und R2 gleich oder verschieden sind und jeweils für eine C₁-C₅-Alkyl-, C₆-C₁₄-Aryl- oder C₇-C₁₁-Alkylaromatengruppe stehen;
R3 und R4 gleich oder verschieden sind und jeweils für ein Wasserstoffatom oder eine C₁-C₅-Alkyl-, C₆-C₁₄-Aryl- oder C₇-C₁₁-Alkylaromatengruppe stehen; und
x für eine ganze Zahl mit einem Wert im Bereich von 2 bis 5 und vorzugsweise 3 steht,
ergeben, wobei das Dienmonomer hauptsächlich gemäß einer Verknüpfung vom 1,4-Typ insertiert ist.

8. Statistisch aufgebautes Diencopolymer nach Anspruch 7, **dadurch gekennzeichnet, dass** es sich bei dem Dienmonomer um 1,3-Butadien handelt.

9. Statistisch aufgebautes Diencopolymer nach Anspruch 7 oder 8, **dadurch gekennzeichnet, dass** es neben diesen ungesättigten Einheiten und diesen Dialkylcarbosilan-Einheiten Einheiten, die sich aus mindestens einem weiteren Monomer ergeben, umfasst.

10. Statistisch aufgebautes Diencopolymer nach Anspruch 9, **dadurch gekennzeichnet, dass** es sich bei dem weiteren Monomer um Styrol handelt.

## Claims

1. Process for the preparation of a random copolymer based on diene monomers and on cyclic carbosilane monomers, **characterized in that** it comprises a stage of copolymerization, in the presence of an anionic initiator in a polymerization solvent comprising an inert polar solvent, of at least one diene monomer and of at least one cyclic carbosilane monomer corresponding to the Formula I: 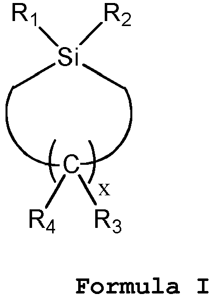 with:
R₁ and R₂, which are identical or different, each being a C₁-C₅ alkyl, C₆-C₁₄ aryl or C₇-C₁₁ alkylaromatic group;
R₃ and R₄, which are identical or different, each being a hydrogen atom or a C₁-C₅ alkyl, C₆-C₁₄ aryl or C₇-C₁₁ alkylaromatic group; and
x being an integer with a value ranging from 2 to 5 and preferably being 3; the fraction by volume of inert polar solvent with respect to the total volume of solvent being at least 10%.

2. Process for the preparation of a random copolymer based on diene monomers and on cyclic carbosilane monomers according to Claim 1, **characterized in that** the polymerization solvent also comprises an inert nonpolar solvent.

3. Process for the preparation of a random copolymer based on diene monomers and on cyclic carbosilane monomers according to Claim 1 or 2, **characterized in that** the anionic initiator comprises an alkali metal, such as an aliphatic organolithium compound.

4. Process for the preparation of a random copolymer based on diene monomers and on cyclic carbosilane monomers according to any one of the preceding claims, **characterized in that** the diene monomer is 1,3-butadiene.

5. Process for the preparation of a random copolymer based on diene monomers and on cyclic carbosilane monomers according to any one of the preceding claims, **characterized in that** at least one other monomer copolymerizes during the copolymerization stage.

6. Process for the preparation of a random copolymer based on diene monomers and on cyclic carbosilane monomers according to Claim 5, **characterized in that** the other monomer is a vinylaromatic compound, such as styrene.

7. Random copolymer comprising, distributed randomly within the main linear chain of the copolymer, unsaturated units resulting from at least one diene monomer and dialkylcarbosilane units resulting from at least one cyclic carbosilane monomer of Formula I: 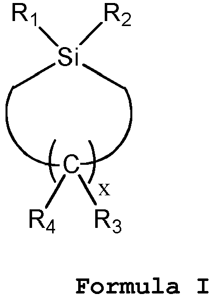 with:
R₁ and R₂, which are identical or different, each being a C₁-C₅ alkyl, C₆-C₁₄ aryl or C₇-C₁₁ alkylaromatic group;
R₃ and R₄, which are identical or different, each being a hydrogen atom or a C₁-C₅ alkyl, C₆-C₁₄ aryl or C₇-C₁₁ alkylaromatic group; and
x being an integer with a value ranging from 2 to 5 and preferably being 3,
the diene monomer being inserted predominantly according to an enchainment of 1,4- type.

8. Random diene copolymer according to Claim 7, **characterized in that** the diene monomer is 1,3-butadiene.

9. Random diene copolymer according to Claim 7 or 8, **characterized in that** it comprises, in addition to these unsaturated units and these dialkylcarbosilane units, units resulting from at least one other monomer.

10. Random diene copolymer according to Claim 9, **characterized in that** this other monomer is styrene.
